# EUROPEAN PATENT APPLICATION

(11) **EP 4 703 294 A1**
(43) Date of publication of application: **04.03.2026**
(21) Application number: 24197121.7
(22) Date of filing: 29.08.2024
(51) Int. Cl.: B65G 1/04

(54) **AN ACCESS STATION**

(71) Applicant: AutoStore Technology AS, 5578 Nedre Vats (NO)
(72) Inventor: Austrheim, Trond, 5578 Nedre Vats (NO)
(74) Representative: Kilburn & Strode LLP

(57) **Abstract**

The disclosure relates to an access station for presentation of a storage container from an automated storage and retrieval system for picking, wherein the access station comprises: a frame; an actuator arranged to move relative to the frame to control movement of a storage container relative to the frame; a sensor arranged to detect movement of a picker relative to the frame; one or more controllers arranged to control the movement of the actuator based on the movement of the picker so as to prevent the movement of the storage container relative to the frame.

## Description

### TECHNICAL FIELD

The disclosure relates to an access station. More particularly, it relates to an access station for presentation of a storage container from an automated storage and retrieval system for picking.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

The combination of moving containers and human pickers and packers introduces a potential safety concern. It is desirable that systems be configured to reduce or remove risks associated with the automated moving of containers in the vicinity of human pickers and packers.

### SUMMARY

One or more aspects of an invention are set out in the appended claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an access station;
Fig. 6A is a cross-sectional view of an access station in a first state;
Fig. 6B is a front view of the access station of Fig. 6A;
Fig. 6C is a cross-sectional view of an access station in a second state;
Fig. 6D is a front view of the access station of Fig. 6C;
Fig. 7A is a cross-sectional view of an access station in a third state;
Fig. 7B is a front view of the access station of Fig. 7A;
Fig. 7C is a cross-sectional view of an access station in a fourth state;
Fig. 7D is a front view of the access station of Fig. 7C;
Fig. 7E is a cross-sectional view of an access station in a fifth state;
Fig. 7F is a front view of the access station of Fig. 7E;
Fig. 7G is a cross-sectional view of an access station in a sixth state; and
Fig. 7H is a front view of the access station of Fig. 7G.

### DETAILED DESCRIPTION

In overview, the disclosure relates to an access station having one or more devices which control movement of a storage container within the access station and a sensor which sends a signal to control the devices based on whether or not a picker moves into or toward an area inside the access station that poses a risk to the picker. The access station allows a picker (human or robot) access to the storage container through an opening (an access aperture) to allow the picker to place items in the storage container or remove items from the storage container. The one or more devices (e.g. one or more actuators such as a stop actuator, a conveyor actuator, and/or a lift) help to control the movement of the storage container from a storage position to an access position at the opening that allows the picker access to the storage container contents. When the storage container is moving from the storage position to the access position (and/or vice versa), there is a risk that the picker could enter the opening and pinch or trap a body part or component between the moving storage container and a frame or other static or moving part of the access station. The inventors have recognised that by providing a sensor which indicates a particular movement of the picker (e.g. through the opening), the actuator can be controlled to stop or prevent movement of the storage container relative to the access station when the picker moves relative to the access station. This allows an automatic control of moving parts in the access station in reaction to movement of the picker to reduce, minimise or eliminate the risk of a part of the picker becoming trapped, pinched or otherwise damaged or injured by movement of the storage container relative to the access station. This overview is provided to introduce in simplified form a selection of concepts that are further described herein. The overview is not necessarily intended to identify key or essential features of an invention.

### Automated storage and retrieval system overview

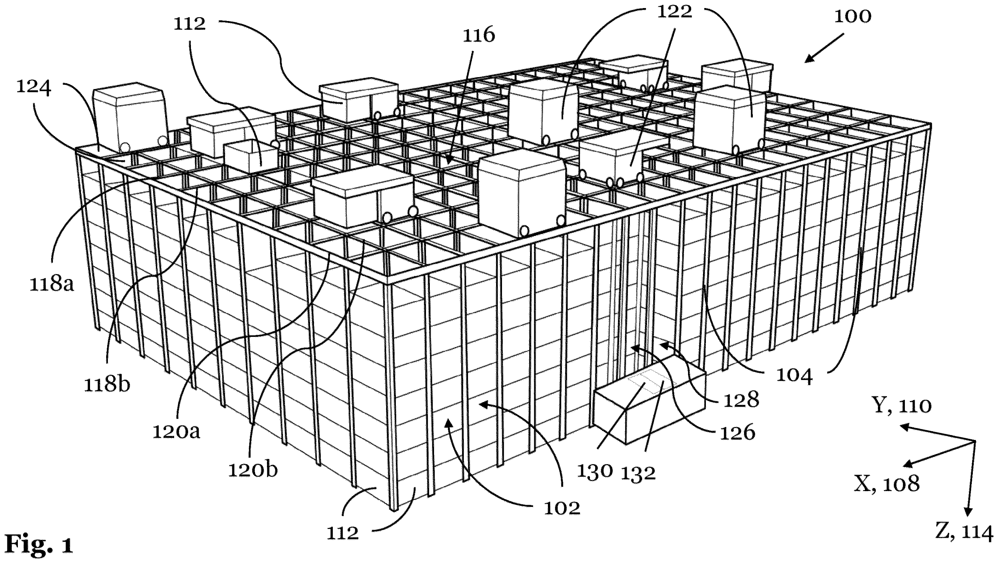

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

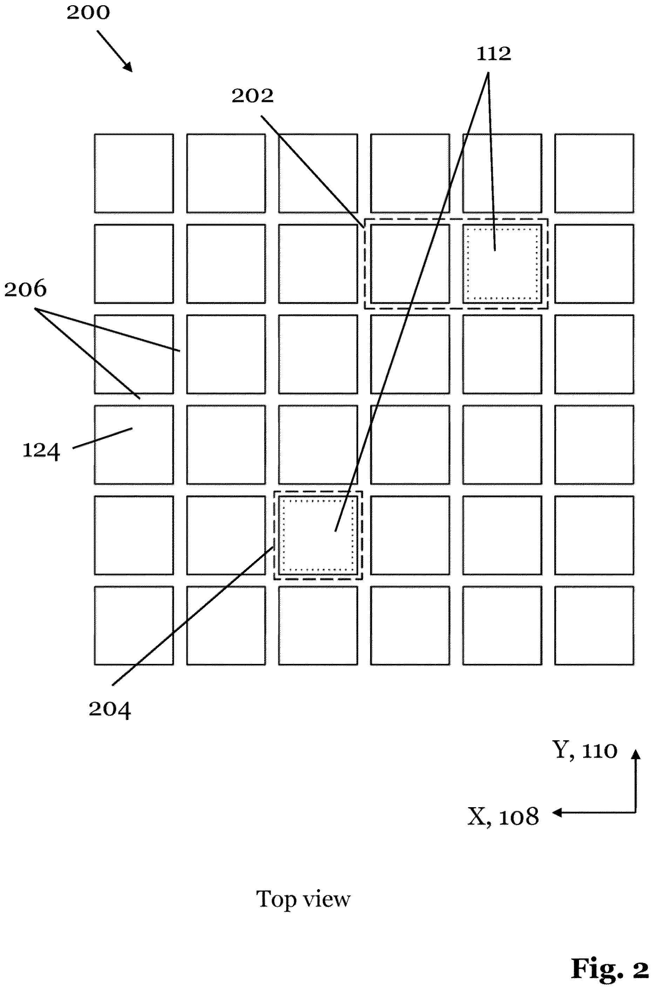

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

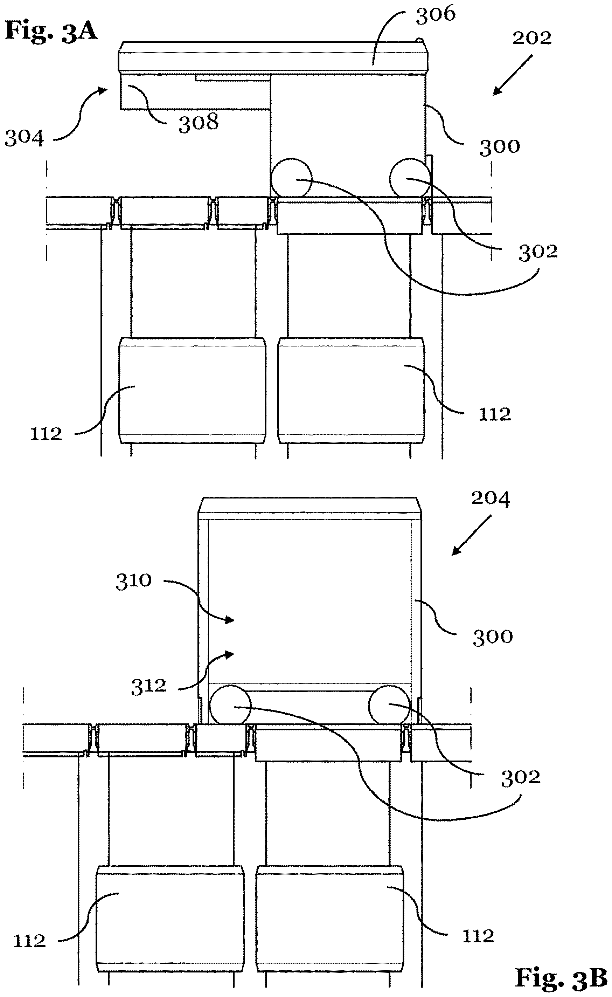

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

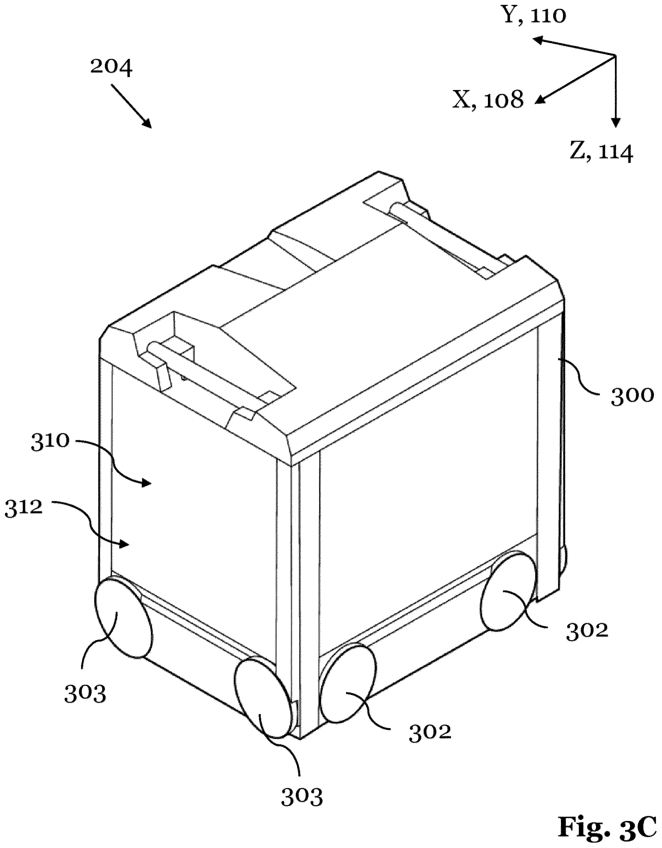

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

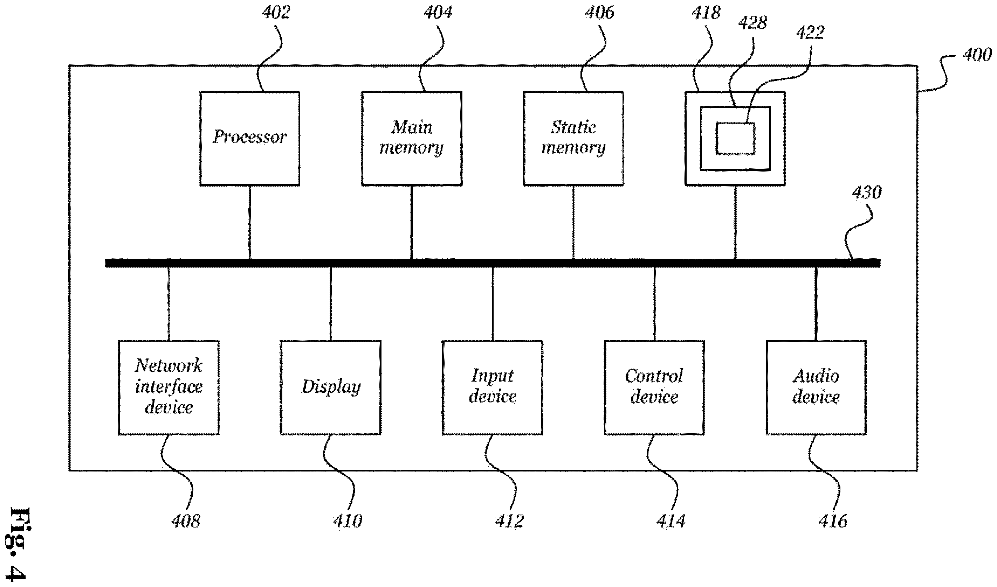

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

### Description of an Access Station

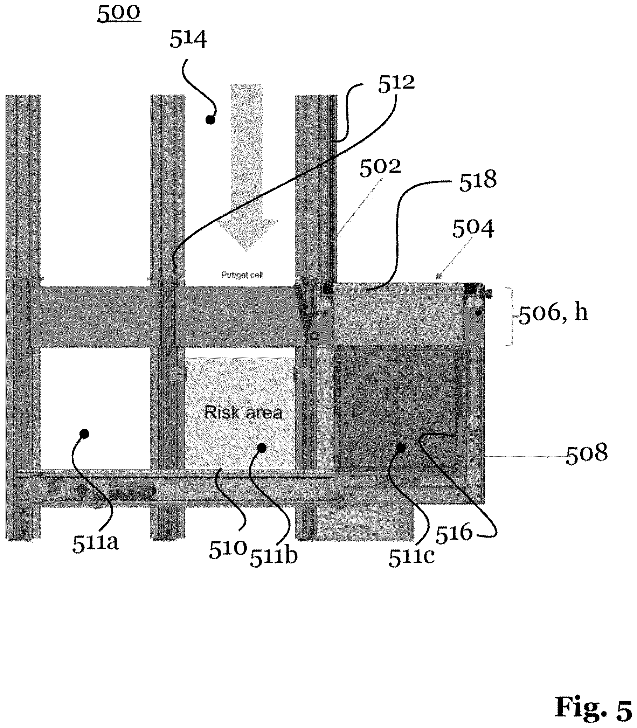

Fig. 5 illustrates an access station 500 in an automated storage and retrieval system. The access station enables storage containers (not illustrated) from the grid to be accessed by a picker/packer at an access station access aperture 504. A picker/packer may be referred to as an operative. The access station 500 is for presentation of a storage container from an automated storage and retrieval system to a picker for picking. The access station 500 comprises a frame; an actuator arranged to move relative to the frame to control movement of a storage container relative to the frame; a sensor 518 arranged to detect movement of a picker relative to the frame; and one or more controllers arranged to control the movement of the actuator based on the movement of the picker so as to prevent the movement of the storage container relative to the frame.

As illustrated in Fig. 1, robotic container-handling vehicles (which herein maybe described as robots) transport containers on rails above the grid. Operatives typically operate external to the grid at a level (e.g. floor or ground level) around the outside of bottom of the grid or around the outside at a mid-level of the grid (e.g. at a mezzanine level). An access station 500 aids, controls and/or guides movement of containers from robotic vehicles on the rail system to the access station access aperture 504. The access station access aperture 504 is vertically displaced relative to the rail system because the grid is configured with the rail system above the storage space, whereas operatives will typically be at a lower level such as at ground level. The access aperture 504 is horizontally displaced relative to outermost vertical frame members 512 to enable an operative to freely access a storage container through the access aperture 504 from above. Therefore, when a storage container is presented to a picker in the access station, a storage container access aperture is located at an uppermost plane of the storage container (i.e. the storage container has an opening in a top face thereof). The access station access aperture 504 and the storage container access aperture are horizontal (that is, they facilitate access in a vertical direction through the horizontal aperture).

The access station 500 includes a container delivery shaft (also referred to herein as a first vertical passage) 514 defined by vertical frame members 512 arranged to guide (or at least provide a passage for) vertical movement of a container, e.g. bin or storage container, (not shown) lowered by a robotic vehicle atop or above the rail system and a horizontal conveyor 510 beneath the rail system. Depending on the direction of travel of the storage container in the container delivery shaft 514, the container delivery shaft can be for delivering a storage container from a robot operating atop the grid to the access station or for returning a storage container from the access station to the same or another robot operating atop the grid.

The storage container is moveable in the container delivery shaft 514 between an upper position (e.g. at the top or upper part of the grid) and a lower position at the horizontal conveyor 510. A base of the container delivery shaft 514, defined by a conveying surface of the horizontal conveyor 510, may be referred to as a lower position in the container delivery shaft 514. A frame supports the vertical frame members 512 defining the container delivery shaft 514 (or otherwise the vertical frame members are supported on a platform or a floor). The frame or vertical frame members 512 support the front lift 508, horizontal conveyor 510, and the other access station components. The frame provides a fixed frame of reference relative to which movements are defined, with the access station in broad terms being configured to move a storage container from a first position relative to the frame to a second position relative to the frame. The second position may be an access position at which the storage container is accessible to a picker.

The container delivery shaft 514 allows movement of a storage container through a vertical range of motion between the height of the rail system and the upper surface of storage container handling parts (e.g. the conveyor 510) of the access station 504. In the access station of Fig. 5, the vertical frame members 512 and horizontal conveyor 510 are arranged so that the storage container can be horizontally conveyed with the storage container access aperture at a height at least a length of a passage 506 beneath the access station access aperture 504. In other words, the horizontal conveyor 510 is arranged so that the horizontal conveying surface is more than the height of a storage container beneath the access station access aperture 504 so as to provide the passage 506 for the storage container between the horizontal conveyor 510 and the access station access aperture 504.

The storage container is lowered into and lifted out of the container delivery shaft 514 by one of the robots 122 that travels on top of the grid 100. The robot 122 moves on the grid and lowers and lifts the storage container in accordance with control signals from a robot controller. The robot controller may be a device specific to the robot or may be part of a(n e.g. centralised) controller for the access station. The robot controller may be distributed with some functionality at a device specific to the robot, and some at a(n e.g. centralised) controller for the access station.

A stop actuator 502 is arranged to move between a first actuator position and a second actuator position relative to the frame (or relative to a vertical frame member 512) to control movement of a storage container relative to the frame (or relative to a vertical frame member 512). In the second actuator position, the storage container is able to move through its full range of motion within the container delivery shaft 514 uninhibited by the stop actuator 502. In the first actuator position, the stop actuator 502 prevents vertical motion of the storage container, for example to prevent it moving past a vertical position of the stop actuator 502. Thus, during downward movement of a storage container from an upper position within the container delivery shaft 514 to the horizontal conveyor 510, the stop actuator 502 in the first position blocks at least a portion of the storage container from moving beneath the height at which the stop actuator 502 is positioned. The stop actuator 502 may be a latch or lever member rotatable about a pivot or axis at one end or may be, for example a solenoid-type arrangement that protrudes and retracts to move between the first and second positions. Alternatively, or in addition, the stop actuator 502 may take the form of a detent, lever, stopper or other component capable of stopping movement of the storage container past a particular position.

A stop actuator controller (not shown) controls movement of the stop actuator 502 from the second actuator position to the first actuator position at a timing determined by a sensor signal. The stop actuator controller may also be configured to reset the stop actuator 502 from the first actuator position to the second actuator position. In an alternative arrangement, resetting the stop actuator 502 to the second actuator position may be manual.

Other actuators, for example, the front lift 508 and/or the horizontal conveyor 510, may also be arranged to move relative to the frame to control movement of a storage container relative to the frame, and to have a controller arranged to control the movement of the actuator based on movement of the picker detected by a sensor so as to prevent the movement of the storage container relative to static components of the access station. The front lift 508 and the horizontal conveyor 510 are examples of actuators arranged to move a storage container relative to the frame between a respective first storage container position and second storage container position. The horizontal conveyor 510 is a conveyor arranged to move the storage container horizontally relative to the frame on a conveying surface, such as a belt running around a system of wheels powered by a motor. The front lift 508 is arranged to move the storage container vertically relative to the frame from a lower position (e.g. on top of the horizontal conveyor 510) up to the access station access aperture 504.

The horizontal conveyor 510 is configured to run in forward (toward the access aperture 504) and reverse directions. The horizontal conveyor 510 is configured to move a storage container horizontally between a position in which the storage container access aperture is positioned directly below (and aligned horizontally with) the access station access aperture, and a position in which the storage container can be lifted up the container delivery shaft 514 by, for example, a robot operating atop or above the grid. The horizontal conveyor 510 can also move a first storage container further from the access station access aperture 504 to behind the container delivery shaft 514 so that a second storage container can be moved down the container delivery shaft 514 to the horizontal conveyor 510 in front of the first storage container such that the second storage container is closer to the access station access aperture 504 than the first storage container. The length of a useable upper surface of the horizontal conveyor 510 (i.e. the surface that can support a storage container) may therefore be at least twice or at least three times the length of a storage container (both dimensions measured in the direction of travel of the horizontal conveyor).

For example, in the access station 500 of Fig. 5, the horizontal conveyor 510 is arranged with a horizontal range of motion extending at least a length of a storage container to the rear of the lower end of the container delivery shaft 514, in addition to at least a length of a storage container to the front of the container delivery shaft 514. Such an arrangement is optional, and provides a rear conveying region 511a at least the size of a storage container to the rear of the lower part of the container delivery shaft 514, at which an arriving storage container transitions from the container delivery shaft 514 to the horizontal conveyor 510. A returning storage container being returned to the grid from the access station 500 may occupy the rear conveying region 511a during downward movement of an arriving storage container through the container delivery shaft 514 without inhibiting vertical passage of the arriving storage container. The forward horizontal conveying of the arriving storage container toward the access station access aperture thereby also conveys the returning storage container in a forward direction out of the rear conveying region 511a and to an intermediate conveying region 511b at the lower part of the container delivery shaft (the intermediate conveying region 511b may also be referred to as a central or transitional conveying region), thereby being in position for lifting through the container delivery shaft back to the rail system by a robot. The horizontal conveyor can move a container from the rear conveying region 511a through the intermediate conveying region 511b to a front conveying region 511c provided forward of the lower part of the container delivery shaft 514.

The horizontal conveyor 510 moves in accordance with control signals from a horizontal conveyor controller. Such a controller may be a centralised controller, or may be specific to the horizontal conveyor, or may be distributed between the two.

A front lift 508 is arranged to move a storage container between a forward end of the horizontal conveyor 510 (e.g. the front conveying region 511c) and the access station access aperture 504. The front lift 508 is configured to move a storage container vertically between immediately above (e.g. resting on) a forward end of the horizontal conveyor 510, and an access position at which the storage container access aperture is accessible to an operative through the access station access aperture 504. The front lift 508 is an example of an actuator arranged to move the storage container relative to the frame between a first storage container position and a second storage container position. The access position may correspond with an uppermost position of a movable portion (which may be a platform underneath the storage container) of the front lift 508. That is, when the moveable portion of the front lift 508 is at the uppermost position, the storage container is at the access position. The height of the access position, and therefore the uppermost position of the movable portion, can be designed to present the storage container to the picker at a height that is ergonomic. From an ergonomic perspective, the picker should not be compelled to bend over a long way to access the storage container in the access position while also having good visibility of goods stored in the storage container when it is at the access position.

The front lift moves in accordance with signals from a front lift controller. Such a controller may be a centralised controller, or may be specific to the horizontal conveyor, or may be distributed between the two.

The front lift controller, the stop actuator controller, and the horizontal conveyor controller may be provided by a single controller, by multiple independent controllers, or by multiple interconnected controllers. One or more of these controllers maybe arranged to receive an alert signal from a sensor. The sensor is configured to sense or detect movement of the picker relative to the frame, and to output a signal representing the detection to a controller of an actuator. It may be that the signal is output upon one or more conditions being met, such as conditions relating to the operating state of the actuators and/or a location or position of the detected movement. The sensor may be an optical sensor. The sensor may be a light gate 518, such as that illustrated in Fig. 5. The condition may be that the detected movement is through (or into) an aperture in the access station (e.g. an aperture allowing into the access station from outside the access station). Alternatively, or in addition, the condition may be that the detected movement is into or toward a risk zone within the access station. For example, the movement may be from outside of the access station to a space defined by (at least partially enclosed by) the frame of the access station 500 via the access station access aperture.

In the embodiment shown in Fig. 5, the light gate 518 is configured to coincide with the access station access aperture 518. That is, the light gate area covers the (e.g. entire) access aperture area. The light gate 518 is an example of a sensor arranged to detect movement of a picker relative to the frame (e.g. through the access station access aperture). The sensing field of other sensors (for example, a camera) arranged to detect movement of a picker relative to the frame may not need to coincide with the access station aperture to detect a part of a picker/operator crossing the access station access aperture. For example a camera could be positioned to observe the access station and infer movement of the part of the picker through the access station aperture. However, by collocating the sensing field with the access station aperture, a more accurate determination of when a body part of the operator (or component of a picker) has entered the access station can be achieved.

The light gate 518 is configured to send an alert signal to one, any, or all of the one or more controllers. The alert signal from the light gate 518 is sent in response to the light gate 518 being broken, for example, by a picker. In response to receiving the alert signal, the controller controls the respectively controlled actuator (being the stop actuator 502, the front lift 508, or the horizontal conveyor 510) to prevent (or cease) movement of the storage container. Therefore, entry of the picker, including of a hand, arm or other body part or item of clothing, or entry of any other object, into a region in which a storage container is being moved relative to the frame, causes a cessation of the storage container movement, and a risk of contact between the picker and the moving storage container is reduced or eliminated. In particular, a risk of trapping a limb or digit of the picker, or an object, between a storage container and an element of the frame is reduced or eliminated.

### Transport Path, Risk Zones, Safety Equation

The frame (which may include the vertical frame members 512) defines a transport path for the storage container between a position at the top of the storage grid and an access position, wherein, at the access position, the storage container is accessible to the picker through the access station access aperture 504 (which may be an aperture defined by an edge of the frame and representing an interface between an interior of the frame and an exterior of the frame). The transport path between the access position and a position at the top of the grid is defined at the access position end by a passage (or chute or shaft or tunnel) such as the safety passage 506 discussed in more detail below.

The transport path of a container is the route the container takes from engagement by a robot at the top of the container delivery shaft, to the access position, and back again. There are at least one areas or regions in the transport path at which the presence of any part of a picker places the picker at particular risk of injury. One such risk zone (or risk area or volume) is highlighted in Fig. 5. The risk zone is at the lower end of the container delivery shaft 514 (for example at the intermediate conveying region 511b) and in the immediate vicinity of this region, where there is risk of a part of the picker (such as hand, foot, arm, finger) or an object being caught, trapped or pinched.

Such catching, trapping or pinching can occur in a number of ways. For example, a part of the picker can be caught between a portion of the frame and the upper part of a storage container being transported up the container delivery shaft. A part of the picker can be caught underneath a container being transported down the container delivery shaft 514. A part of the picker can be caught between the upper part (inside edge or outside edge) of a storage container and the frame by a container being transported away from the picker by the horizontal conveyor 510. A part of the picker can be caught between an upper part of the storage container and the frame by a container being transported upwards towards the access station access aperture 504 by the front lift. A distance S between the access station access aperture 504 and the risk zone is illustrated in Fig. 5, noting that a range of values exist for S between a minimum S (defining a shortest feasible path between the container delivery shaft and the access station access aperture 504) and a maximum S (defining a longest feasible path between the container delivery shaft and the access station access aperture 504). Fig. 5 illustrates a distance S within the range between the minimum S and the maximum S.

The transport path comprises a risk zone such as that illustrated in Fig. 5. In one implementation, the risk zone can extend from an upper position (such as a horizontally extending portion of the frame above a storage container on the horizontal conveyor) and a lower position such as on a conveying surface of the horizontal conveyor 510. The actuator controller is arranged to stop movement of the storage container at a reaction time T after detection of movement of the picker relative to the frame by the sensor. The access station is arranged so that a part of the picker moving at a threshold maximum velocity and following the shortest path between the access station access aperture 504 and the picker either cannot reach the risk zone before the end of the reaction time, or cannot reach within a threshold minimum distance of the risk zone before the end of the reaction time.

The access station may be arranged to conform to a safety standard of a relevant authority or set of guidelines. In one example, a safety equation S = kT + C may be used to calculate a minimum allowable value for S, which is the distance from the sensor (e.g. light gate) to the risk zone. K is an approach speed of a picker or operative and in an example may be given as 2000mm/sec. T is a reaction time or latency period between the light curtain 518 being broken and the actuator 502 responding to block downward translation of a storage container into the risk zone. C is an additional distance specified by the relevant authority or set of guidelines (for example, EN ISO 13855, ISO/FDIS 13855) for different types of machinery, risk profiles, etc. For example, the response time of the access station might be 0.1 seconds or 0.15 seconds, so that the access station is arranged with S 200mm or 300mm greater than the relevant C value.

The provision of a vertical safety passage 506 of height h at an uppermost end of a vertical passage between the front conveying region 511c and the access position increases distance S compared with an access station not having a safety passage 506. The height h of the safety passage 506 is configurable at design in dependence upon the relevant safety guidelines applying to the specific access station.

For example, the length of the passage 506 along the transport path defines a safety zone between a proximal end of the passage 506 at the access position and a distal end of the passage 506. The actuator is arranged to stop movement of the storage container at a reaction time T after detection of movement of the picker relative to the frame by the sensor, the length of the safety zone being configured so that a body part of a picker moving at a predefined maximum velocity and following a shortest path either cannot pass through the safety zone before the end of the reaction time, or cannot reach within a predefined distance of the end of the safety zone before the end of the reaction time.

The stop actuator may be positioned at a height above the bottom of the container delivery shaft which is calculated such that a container being delivered or accidentally dropped through the container deliver shaft would always reach the bottom of the container delivery shaft within the reaction time T if the storage container has already passed the stop actuator when the alert signal from the sensor is sent to (or received by) the stop actuator.

Another example of a risk area might be defined as the front wall 516 at the most forward position reached by the storage container in a horizontal passage between the container delivery shaft 514 and the front lift 508, the horizontal conveyor 510 being configured to move the storage container along the horizontal passage between the rear conveying region 511a and the front conveying region 511c. A risk exists of an operative trapping a body part such as a hand or arm between the front wall of the access station and the storage container being conveyed forward by the horizontal conveyor 510.

The access station vertical safety passage 506 of height h provides a separation between the said risk region and the light curtain 518, so that a body part of an operative must travel some distance h, taking a period of time, before reaching the risk region. The reaction time of the horizontal conveyor in stopping responsive to the light curtain 518 being broken may be configured to be less than a predicted value for the period of time. The predicted value for the period of time may be calculated using the S = kT + C formula described above with a value k of speed and C value provided by the relevant guidelines or at the choice of the designer, with S being the height h of the safety passage 506.

The front lift 508 may also be configured with a reaction time in stopping responsive to the light curtain being broken to be less than the said predicted value for the period of time described in the previous paragraph. Noting that the safety passage 506 is arranged so that trapping of digits or limbs of a picker between a safety passage wall (or an access station access aperture lip) and a container being vertically translated by the front lift 508 is not feasible, whereas beyond the safety passage it may be that some risk exists owing to the different arrangement of walls, lift components, frame elements, etc.

### Controllers and Reaction Times

The stopping of the lifts, horizontal conveyor, and moving of the stop actuator 502 is caused by the respective controllers. The controllers may be separate control devices for each actuator, or there may be a single centralised controller controlling all of the actuators. There may be a hybrid arrangement in which some control functionality is at the separate control devices for each actuator, and some is at a centralised controller. The controller or controllers are communicably coupled to the sensor (for example, light curtain 518), and to the respective actuator. In response to the light curtain 518 being triggered, the access station may be configured, via the controller or controllers, to cause translation or movement of the storage container relative to the frame to stop, or to define a limit beyond which no further translation or movement can occur. In particular, the access station may be configured, via the controller or controllers, to cause one or more from among:
- the stop actuator 502 to block vertical translation of a storage container (e.g. by a robot) beyond a height at which the stop actuator 502 is situated;
- the horizontal conveyor 510 to cease or prevent horizontal translation of a storage container;
- the front lift 508 to cease or prevent vertical translation of the storage container.

The controller or controllers of the respective actuators are communicatively coupled to a sensor arranged to detect movement of a picker relative to the frame (such as across an interface or aperture at one end of the transport path of a storage container). The controller or controllers are configured to control movement of the controlled actuator based on the detected movement of the picker (such as in accordance with a signal received from the sensor representing detection of a movement of the picker such as the movement across the opening or access station access aperture) so as to prevent the movement of the storage container.

The safety passage 506 at an end of the storage container transport path closest to the access station access aperture 504 provides a buffer region within which there is no risk of injury to a picker by insertion of a limb or digit. Since the light curtain 518 is coincident with the access station access aperture 504, the presence of the safety passage 506 means that once the safety curtain is broken, there is a distance a picker limb or digit must travel before being at risk of injury, and hence a time period immediately following breaking of the light curtain 518 at which there is no risk of injury. The said time period may be estimated by calculating a maximum speed of motion for the picker limb or digit, and the height h of the safety passage 506. Reaction times of the actuators in acting to stop movement of the container (or to stop the container moving into a risk region) may be configured to be shorter than the said time period.

The safety passage 506 has a cross section matching or corresponding to a horizontal cross section (i.e. a footprint) of a storage container, or incorporating a small gap to reduce friction between the container and safety passage 506 during vertical translation by the front lift 508). The safety gap is of a size precluding a digit, body part or component of a picker being trapped between the container and the walls of the safety passage. For example, the safety gap may be less than 8mm, less than 7mm, less than 6mm, less than 5mm, less than 4mm, less than 3mm, less than 2mm, or less than 1mm. *Function of Actuator in Blocking Downward Translation of a Storage Container*

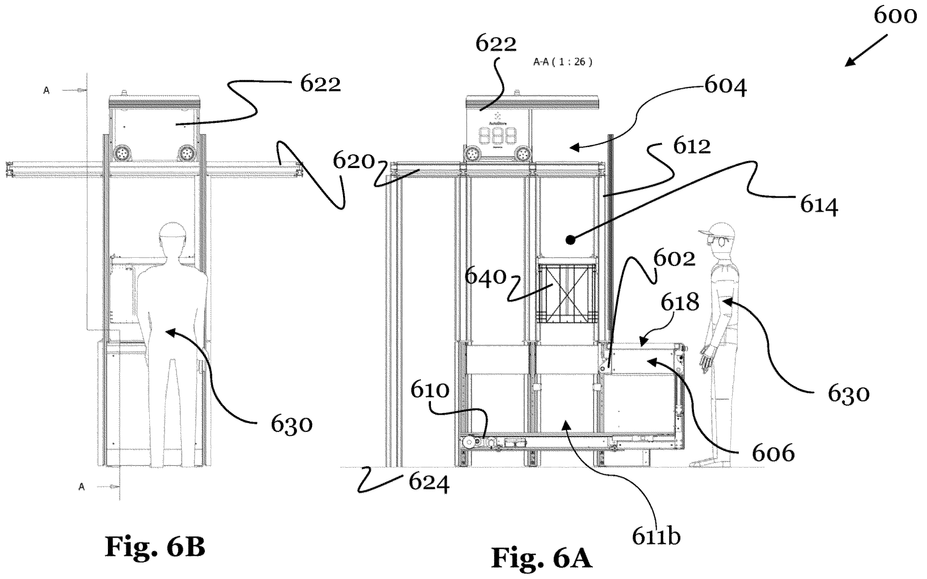

Figs. 6A to 6D illustrate an access station 600. The access station 600 shown in Figs. 6A to 6D is identical to the access station 500 described with reference to Fig. 5 except where described otherwise. Like reference numerals refer to like parts. For example, in Figs. 6A to 6D, the feature having reference numeral beginning with the number 6 and having a suffix of 02 corresponds to the feature having the reference numeral 502 described with reference to Fig. 5. Figs. 6A to 6D illustrate a functionality of the stop actuator 602 in blocking downward translation of a storage container 640 relative to the frame in the container delivery shaft 614.

Fig. 6A illustrates a first state of the access station 600 and picker 630. Fig. 6A is a cross-sectional view through a cross-section indicated by the line A-A in Fig. 6B. In the first state, the storage container 640 is being translated vertically downward through the container delivery shaft 614 by a robot 622. The downward translation is from an upper (or storage) position 604 at which the storage container 640 is held by the robot 622 in a manner in which the robot is able to move the storage container 640 on a system of rails 620 arranged in the X-Y, or horizontal, plane. The system of rails 620 is elevated relative to a ground level 624. A picker 630 is situated at ground level 624. Therefore access to the storage container 640 by the picker 630 requires the storage container 640 to be moved to a lower position relative to the system of rails 620. The downward translation is to a lower position 611b (e.g. an intermediate conveying region) at which vertical translation of the storage container 640 through the container delivery shaft 614 ends, and horizontal translation of the storage container 640 by the horizontal conveyor 626 can begin. In the first state, the storage container 640 is between the two extremes of the vertical passage defined by the container delivery shaft 614.

A light curtain 618 is arranged at an access station access aperture. At the access station access aperture, a picker 630 may access a space defined by the frame of the access station 600. The picker 630 may introduce a limb or digit to the access station, and specifically to a transport path of the storage container. At the transport path of the storage container, there is risk of injury to the picker 630 by moving parts and moving storage containers trapping limbs or digits of the picker 630 against frame elements, against other storage containers, or otherwise to cause injury.

A proximal portion of the transport path (relative to the picker 630 so that proximal is the first portion accessible to the picker 630) is formed by a safety passage 606, which is dimensioned such that there is no risk of trapping limbs or digits of the picker 630 between a storage container 640 and other physical element. For example, the cross section of the passage 606 may match the storage container footprint so that there is no gap (or only a very small gap) at the edge of a moving storage container as described with reference to Fig. 5.

A stop actuator 602 is situated adjacent one of the vertical frame members 612 defining the container delivery shaft 614. The stop actuator can selectively protrude or retract from the volume of the container delivery shaft. The stop actuator 602 is arranged to control vertical translation of the storage container 640 within the container delivery shaft 614. In the first state illustrated in Fig. 6A, the stop actuator 602 is in a second actuator position in which the storage container 640 may freely pass the actuator 602.

The light curtain 618 is unbroken in the first state illustrated in Fig. 6A. The controller of the stop actuator 602 receives a continuous signal from the light curtain indicative of a state of the light curtain, being broken or unbroken. At a change from unbroken to broken state, the controller is configured to cause the stop actuator 602 to move to the first actuator position in which the storage container 640 is blocked from descending past the stop actuator 602. In an alternative signalling mechanism, the controller may receive a trigger signal from the light curtain indicating a change in light curtain state from unbroken to broken. In response to the trigger signal the controller is configured to cause the stop actuator 602 to move to the first actuator position in which the storage container 640 is blocked from descending past the stop actuator 602. In the trigger signal example, a continuous signal is not required.

Resetting of the stop actuator 602 to the second actuator position may be allowed in dependence upon the light curtain 618 being unbroken. A signal from the light curtain 618 indicating the light curtain state (broken/unbroken) may be obtained by the controller of the stop actuator 602 in response to a reset attempt. The signal may be received continuously so that the controller is continuously aware of light curtain state. Alternatively, at the reset attempt the controller of the actuator 602 may poll the light curtain 618, and the light curtain 618 (specifically, control circuitry thereof) responds to the polling with an indication of light curtain state as broken or unbroken. The controller may effectively lock the stop actuator 602 in the first actuator position until a reset attempt, and unlock to allow the stop actuator 602 to return to the second actuator position in response to the reset attempt in dependence upon the light curtain 618 being unbroken.

Fig. 6B illustrates the access station 600 and picker 630 in the same first state as in Fig. 6A, but from a front view.

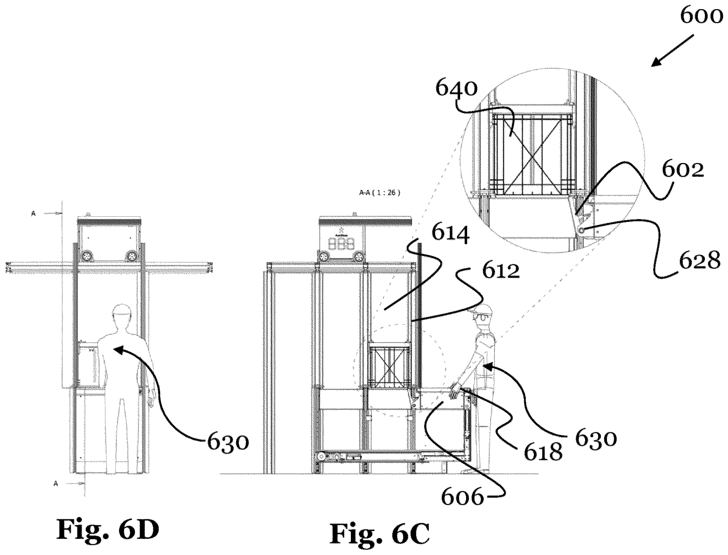

Fig. 6C illustrates a second state of the access station 600 and picker 630. Fig. 6C is a cross-sectional view through a cross-section indicated by the line A-A in Fig. 6D. A portion of the view is blown up to highlight a movement, from the first state of Fig. 6A, of the stop actuator 602 relative to the frame to control movement of the storage container 640 relative to the frame.

Two contexts may exist for the second state. In a first context, the second state illustrated in Fig. 6C occurs after the first state of Fig. 6A. During the interim time period between the first and second states, the picker 630 has moved relative to the frame, and in particular has moved a hand through the access station access aperture and therefore broken the light curtain 618. The breaking of the light curtain has caused, within the interim time period, the controller of the stop actuator 602 to cause the stop actuator to move relative to the frame to prevent further downward translation of the storage container 640 through the container delivery shaft 614 beyond the height of the stop actuator 602. The stop actuator 602 is moved relative to the frame to block a vertical passage of the storage container 640 before the hand of the picker 630 had passed through the safety passage 606. The stop actuator 602 blocked further movement of the storage container 640 before any part of the picker 630 had time to pass through the safety passage 606.

Alternatively, in a second context, the second state illustrated in Fig. 6C does not form part of the same sequence of states as the first context, but illustrates an alternative scenario in which, rather than the light curtain being unbroken per the first state, the light curtain 618 is broken (but timing of the first breaking could be at any time during downward vertical translation of the storage container 640 through the container delivery shaft 614).

In the specific example of Fig. 6C, the stop actuator 602 is a lever or latch that is configured to rotate about a pivot or axis from the second actuator position of the first state of Fig. 6A to the first actuator position of the second state of Fig. 6C under a force such as gravity or an electromagnetic force generated under control of an actuator controller. In the case of gravity, the controller may respond to a signal indicating breaking of the light curtain 618 by releasing the stop actuator 602 so that it is allowed to rotate about the pivot 628 to the first actuator position of Fig. 6C. For example an electromagnetic force holding the stop actuator 602 in place in the second actuator position may be stopped in response to the signal indicating breaking of the light curtain 618, thus allowing the stop actuator 602 to rotate about the pivot 628 to the first actuator position shown in Fig. 6C. Alternatively, an auxiliary actuator retaining the actuator 602 in the second actuator position may be moved in response to the signal indicating breaking of the light curtain 618, thus allowing the actuator 602 to rotate about the pivot 628 to the first actuator position of Fig. 6C. Alternatively, the controller of the actuator 602 may comprise a solenoid or a motor, which compel the stop actuator 602 from the second actuator position to the first actuator position shown in Fig. 6C. In the compelling force case, acceleration of the actuator 602 may result from gravity and/or the compelling force.

In the first actuator position illustrated in Fig. 6C, the storage container 640 was approaching vertically downward toward the stop actuator 602 from above at a time of actuation, and therefore the stop actuator 602 blocks further downward movement of the storage container 640 by obstructing the vertical passage beneath the storage container 640. Downard passage of the storage container 640 beyond a position at which the base of the storage container 640 is vertically coincident with a highest end or surface of the actuator 602 is precluded.

The actuator 602 maybe positioned so that, in a circumstance in which the storage container 640 is vertically coincident with the stop actuator 602 at a time of actuation, the stop actuator 602 at least partially enters a space beneath a horizontal rib or flange of the storage container 640. Downward passage of the storage container 640 beyond a position at which the horizontal rib or flange is vertically coincident with a highest end or surface of the stop actuator 602 is precluded.

Fig. 6D illustrates the access station 600 and picker 630 in the same second state as in Fig. 6C, but from a front view.

### A Series of States to Demonstrate Transport Paths of Storage Containers

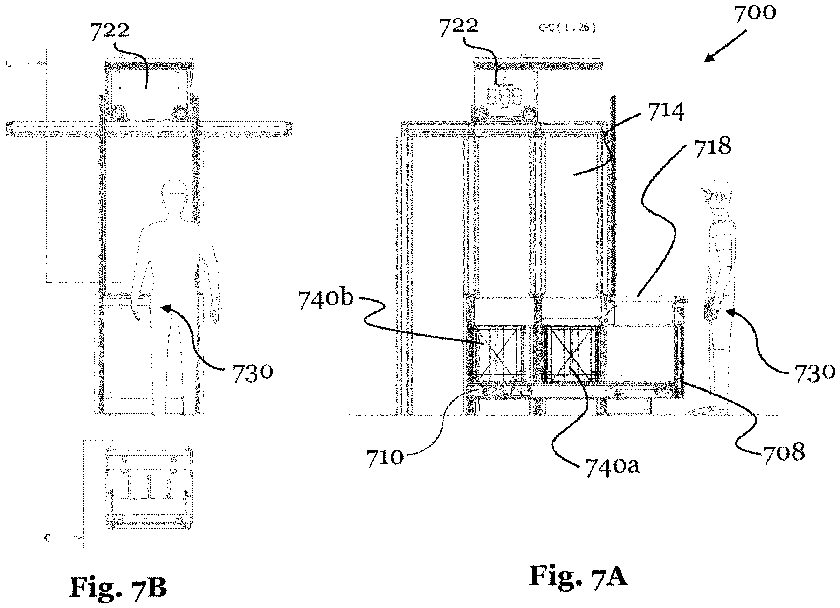

Figs. 7A and 7B are, respectively, a cross sectional view and a front view of the access station shown in Figs. 6A-6D. Like reference numerals refer to like parts. For example, in Figs. 7A and 7B, the feature having reference numeral beginning with the number 7 and having a suffix of 18 corresponds to the feature having the reference numeral 618 described with reference to Figs. 6A-6D. Figs. 7A and 7B show the access station 700 and picker 730 in a third state forming part of a different sequence of states than the first and second states. Fig. 7A is a cross-sectional view along a plane indicated by line C-C in Fig. 7B.

A robot 722, which may be the same vehicle that transported arriving storage container 740a to the access station 700, or may be a different vehicle, is awaiting a returning storage container 740b. For example, the returning storage container 740b has been picked or packed by a picker 730 via access station access aperture 718, returned to the horizontal conveyor 710 by a front lift 708 (to the front conveying region), and transported in a rearward direction by the horizontal conveyor 710 to the rear conveying region. The total horizontal conveying distance is at least two (e.g. at least three) storage container lengths. As the returning storage container 740b is behind the container delivery shaft 714, the arriving storage container 740a freely moves from a storage position at which the storage container is accessible to robots on tracks above the access station, down to the horizontal conveyor 710 (i.e. to the intermediate conveying region) without obstruction by the returning container 740b.

The light curtain, or another sensor, is configured in an active state to detect movement of the picker relative to the frame to signal the detection to the one or more controllers arranged to prevent movement of a storage container relative to the frame. The light curtain, or other sensor, may be configured to enter an inactive state in which no power is supplied thereto or it is otherwise configured to not detect picker movement relative to the frame, or to not send any signal notifying the one or more actuator controllers of movement of the picker relative to the frame. For example, it may be that the light curtain is positioned so that with a storage container in the access position the emitted light is completely blocked by the storage container and so the light sensor components of the light curtain sense zero or close to zero received light, the light curtain being configured to respond to the zero or close to zero received light by entering the inactive state (i.e. not sending any detection signals). The light curtain or other sensor may be controlled to be in the active state during any movement in the access station of storage containers by actuators (including front and rear lifts, horizontal conveyor) relative the frame of the access station with the exception of period(s) during which a storage container is at the access position. During the exception period(s), the light curtain or other sensor is in the inactive state. In the access position a storage container access aperture in an uppermost plane of the container is coincident with the access station access aperture 718. Therefore, there is no danger or risk to the picker because access to storage container transport path is blocked by the storage container at the access position. Hence, the inactive state of the sensor allows translation of storage container(s) other than those at the access position to continue unhindered.

In the third state illustrated in Figures 7A and 7B, the storage containers are being conveyed and there is no storage container at the access position, so the light curtain is in the active state.

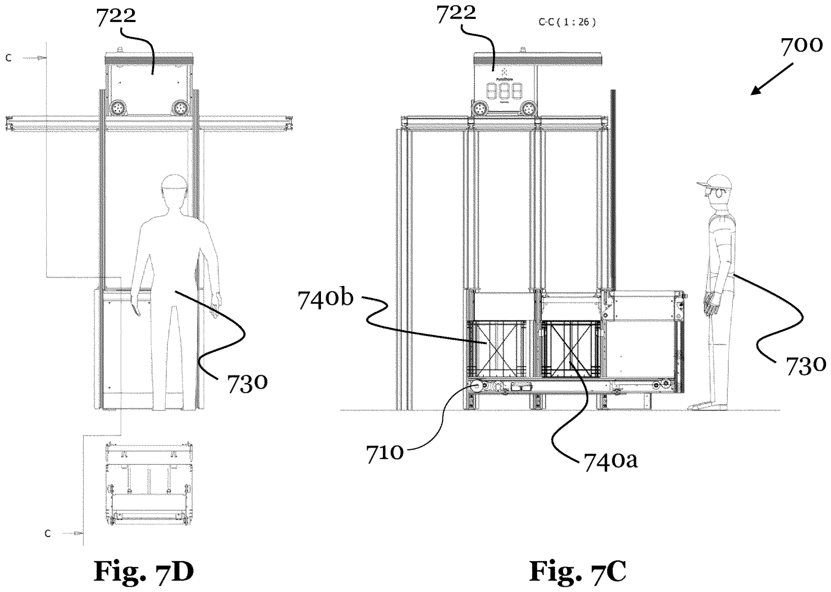

Figs. 7C and 7D are, respectively, a cross sectional view and a front view of the access station 700 and picker 730 in a fourth state occurring as part of the same sequence of states, and after, the third state of Figs. 7A and 7B. Fig. 7C is a cross-sectional view along a plane indicated by line C-C in Fig. 7D.

Compared with the third state, in the fourth state the robot 722 has disengaged the arriving storage container 740a. In the disengaged state, the robot and the arriving storage container 740a are no longer vertically coupled to one another. In the fourth state the storage containers 740a and 740b are being conveyed by the horizontal conveyor 710 but there is not yet any storage container at the access position, so the light curtain is in the active state.

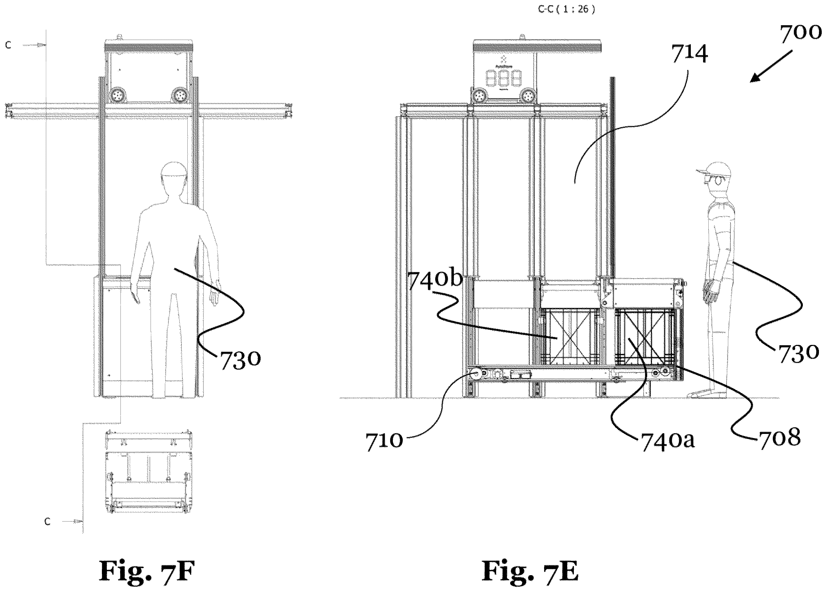

Figs. 7E and 7F are, respectively, a cross sectional view and a front view of the access station 700 and picker 730 in a fifth state occurring as part of the same sequence of states, and after, the fourth state illustrated in Figs. 7C and 7D. Fig. 7E is a cross-sectional view along a plane indicated by line C-C in Fig. 7F.

Compared with the fourth state, in the fifth state the horizontal conveyor 710 has conveyed the arriving storage container 740a and the returning storage container 740b in a forward direction by a single movement of the conveying surface. That is, the horizontal conveyor 710 is configured to simultaneously: convey the returning storage container 740b from the rear conveying region to the intermediate conveying region; and convey the arriving storage container 740a from the intermediate conveying region to the front conveying region.

In the fifth state, the storage containers 740a, 740b are being conveyed and there is no storage container at the access position, so the light curtain is in the active state.

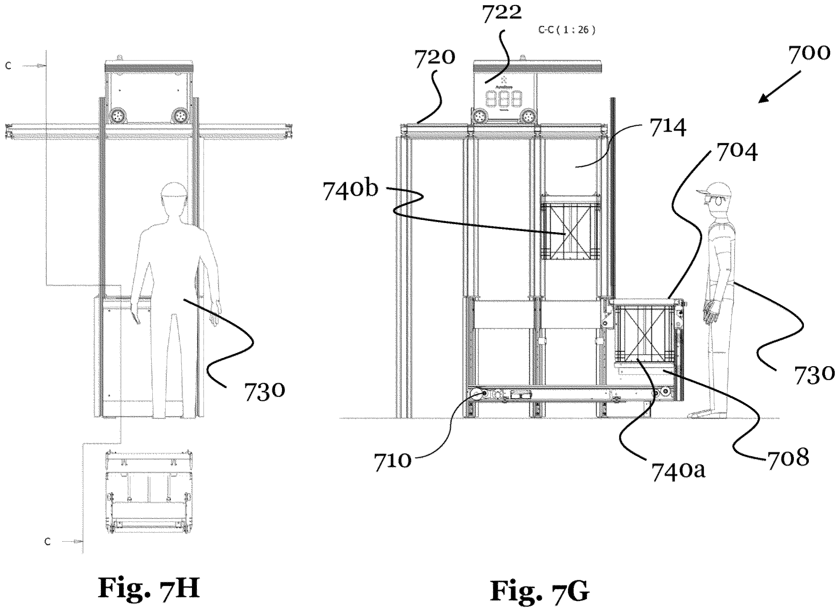

Figs. 7G and 7H are, respectively, a cross sectional view and a front view of the access station 700 and picker 730 in a sixth state occurring as part of the same sequence of states, and after, the fifth state of Figs. 7E and 7F. Fig. 7G is a cross-sectional view along a plane indicated by line C-C in Fig. 7H.

Compared with the fifth state, in the sixth state the front lift 708 has translated the arriving container 740a vertically upward into the access position in which a storage container access aperture in an uppermost plane of the container is coincident with the access station access aperture 704. Furthermore, a robot 722 has engaged the returning storage container 740b to vertically couple with the returning storage container 740b. Once engaged, the robot 722 has translated the returning storage container 740b vertically upward until the robot 722 can move the returning storage container 740b along the rails 720.

In the sixth state, the light curtain is in the inactive state, so that the picker 730 can enter the access station access aperture without causing cessation of movement of storage containers by the actuators. For example, the picker 730 could break the light curtain, or the light curtain could be broken by the arriving storage container 716 itself, without causing any actuator to block movement of the returning storage container 740b. Or the light curtain may be switched off in the inactive state.

Following completion of a picking/packing operation by the picker 730, the picker 730 may activate a button or another human-machine interface element to initiate return of the storage container 740a to the grid. A first movement of the return is downward translation of the storage container 740a to the horizontal conveyor 710 by the front lift 708. Upon movement of the storage container 740a away from the access position by the front lift 708, the light curtain is configured to switch from the inactive state to the active state.

### Penultimate comments and numbered statements describing a controller

The description continues in the following numbered statements:
Statement 1. A controller of an actuator in an access station for presentation of a storage container from an automated storage and retrieval system for picking;
   the actuator being arranged to move relative to a frame of the access station to control movement of a storage container relative to the frame;
   the controller being communicatively coupled to a sensor arranged to detect movement of a picker relative to the frame;
   the controller being configured to control movement of the actuator based on the movement of the picker so as to prevent the movement of the storage container relative to the frame.
Statement 2. The controller according to Statement 1, wherein the controller is configured to move the actuator between a first actuator position relative to the frame and a second actuator position relative to the frame, wherein, when in the first actuator position, the actuator is arranged to block movement of the storage container and, when in the second actuator position, the actuator is arranged to allow movement of the storage container.
Statement 3. The controller according to Statement 1, wherein the actuator is arranged to move the storage container relative to the frame between a first storage container position and a second storage container position.
Statement 4. The controller according to Statement 3, wherein the actuator comprises one or more of the following: a conveyor arranged to move the storage container horizontally relative to the frame, and/or a lift arranged to move the storage container vertically relative to the frame.
Statement 5. The controller according to any preceding Statement, wherein the sensor is an optical sensor.
Statement 6. The controller according to any preceding Statement, wherein the sensor is a light gate.
Statement 7. The controller according to any preceding Statement, wherein the movement of the picker is through an aperture in the access station.
Statement 8. The controller according to any preceding Statement, wherein the frame defines a transport path for the storage container between a storage position and an access position, wherein at the access position the storage container is accessible to the picker through the aperture; and, optionally, the transport path between the access position and a distal position is defined at the access position end by a passage with a cross section having dimensions corresponding to dimensions of the footprint of the storage container.
Statement 9. The controller according to Statement 8, wherein the length of the passage along the transport path defines a safety zone between a proximal end of the passage at the access position and a distal end of the passage, and the actuator is arranged to stop movement of the storage container at a reaction time T after detection of movement of the picker relative to the frame by the sensor, the length of the safety zone being configured so that a body moving at a predefined maximum velocity and following a shortest path either cannot pass through the safety zone before the end of the reaction time, or cannot reach within a predefined distance of the end of the safety zone before the end of the reaction time.
Statement 10. The controller according to statement 8 or 9, wherein the transport path comprises a risk zone at a lowermost end of a first vertical passage between an upper position and a lower position on a conveying surface of a horizontal conveyor, and the actuator is arranged to stop movement of the storage container at a reaction time T after detection of movement of the picker relative to the frame by the sensor, the access station being arranged so that a body moving at a predefined maximum velocity and following a shortest path either cannot reach the risk zone before the end of the reaction time, or cannot reach within a predefined distance of the risk zone before the end of the reaction time.
Statement 11. The controller according to any of Statements 8 to 10, wherein the transport path for the storage container comprises:
   - a first vertical passage between a storage position at which the storage container is accessible to a robotic vehicle arranged to move on tracks above the access station, and a lower position on a conveying surface of a horizontal conveyor;
   - a horizontal passage between the lower position of the first vertical passage and a forward position;
   - a second vertical passage between the forward position of the horizontal passage and the access position.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An access station for presentation of a storage container from an automated storage and retrieval system for picking, wherein the access station comprises:
- a frame;
- an actuator arranged to move relative to the frame to control movement of a storage container relative to the frame,
- a sensor arranged to detect movement of a picker relative to the frame,
- one or more controllers arranged to control the movement of the actuator based on the movement of the picker so as to prevent the movement of the storage container relative to the frame.

2. The access station according to claim 1, wherein the actuator is arranged to move between a first actuator position relative to the frame and a second actuator position relative to the frame,
wherein, when in the first actuator position, the actuator is arranged to block movement of the storage container and, when in the second actuator position, the actuator is arranged to allow movement of the storage container.

3. The access station according to claim 1, wherein the actuator is arranged to move the storage container relative to the frame between a first storage container position and a second storage container position.

4. The access station according to claim 3, wherein the actuator comprises one or more of the following:
a conveyor arranged to move the storage container horizontally relative to the frame,
a lift arranged to move the storage container vertically relative to the frame.

5. The access station according to any preceding claim, wherein the sensor is an optical sensor.

6. The access station according to any preceding claim, wherein the sensor is a light gate.

7. The access station according to any preceding claim, wherein the movement of the picker is through an aperture in the access station.

8. The access station according to any preceding claim, wherein the frame defines a transport path for the storage container between a storage position and an access position, wherein at the access position the storage container is accessible to the picker through the aperture; and
the transport path between the access position and a distal position is defined at the access position end by a passage having a cross section with dimensions corresponding to dimensions of the footprint of the storage container.

9. The access station according to claim 8, wherein the length of the passage along the transport path defines a safety zone between a proximal end of the passage at the access position and a distal end of the passage, and the actuator is arranged to stop movement of the storage container at a reaction time T after detection of movement of the picker relative to the frame by the sensor,
wherein the length of the safety zone is configured so that a part of the picker moving at a predefined maximum velocity and following a shortest path between the distal and proximal ends of the passage either cannot pass through the safety zone before the end of the reaction time, or cannot reach within a predefined distance of the distal end of the safety zone before the end of the reaction time.

10. The access station according to claim 8 or 9, wherein the transport path comprises a risk zone at a lowermost end of a first vertical passage above a conveying surface of a horizontal conveyor, and the actuator is arranged to stop movement of the storage container at a reaction time T after detection of movement of the picker relative to the frame by the sensor, the access station being arranged so that a body moving at a predefined maximum velocity and following a shortest path from an access aperture of the access station to the risk zone either cannot reach the risk zone before the end of the reaction time, or cannot reach within a predefined distance of the risk zone before the end of the reaction time.

11. The access station according to any of claims 8 to 10, wherein the transport path for the storage container comprises:
- a first vertical passage;
- a horizontal passage between a lower position of the first vertical passage and a forward position;
- a second vertical passage between the forward position of the horizontal passage and the access position.

12. The access station according to claim 11, comprising:
a horizontal conveyor arranged along the bottom of the horizontal passage and
configured to move the storage container horizontally relative to the frame from the lower position of the first vertical passage to a rear conveying region behind the lower portion of the first vertical passage, the rear conveying region having a length equal to or
greater than a storage container length; and
a robot configured to move an arriving storage container down through the first vertical passage to the lower position of the first vertical passage while a returning storage container occupies the rear conveying region, the robot arranged to release the arriving storage container on the horizontal conveyor,
wherein the horizontal conveyor is configured to move the arriving storage container and
the returning storage container forward until the returning storage container occupies the lower position of the first vertical passage, and
the robot is arranged to engage the returning storage container at the lower position of the first vertical passage to return the returning storage container to the storage position.

13. A controller for an actuator in an access station for presentation of a storage container from an automated storage and retrieval system for picking;
the actuator being arranged to move relative to a frame of the access station to control movement of a storage container relative to the frame;
the controller being communicatively coupled to a sensor arranged to detect movement of a picker relative to the frame;
the controller being configured to control movement of the actuator based on the movement of the picker so as to prevent the movement of the storage container relative to the frame.

14. A method of controlling an actuator in an access station for presentation of a storage container from an automated storage and retrieval system for picking;
the actuator being arranged to move relative to a frame of the access station to control movement of a storage container relative to the frame;
the method comprising:
receiving, from a sensor arranged to detect movement of a picker relative to the frame, a signal representing detection of movement of the picker relative to the frame; and
controlling movement of the actuator based on the signal so as to prevent the movement of the storage container relative to the frame.

15. A computer-readable medium comprising instructions which, when executed by a processor or controller of a device, cause the device to perform the method of claim 14.
